# EUROPEAN PATENT SPECIFICATION

(11) **EP 3 800 368 B1**
(45) Date of publication and mention of the grant of the patent: **02.10.2024**
(21) Application number: 20193580.6
(22) Date of filing: 31.08.2020
(51) Int. Cl.: F16F 1/376, F16F 9/58

(54) **EXTENSIBLE MEMBER**
DEHNBARES ELEMENT
ÉLÉMENT EXTENSIBLE

(30) Priority: 18.09.2019 JP 2019169066
(43) Date of publication of application: 07.04.2021
(73) Proprietor: Toyo Tire Corporation, Itami-shi, Hyogo 664-0847 (JP)
(72) Inventor: YAMAMOTO, Risako, Itami-shi, Hyogo 664-0847 (JP); UEDA, Takeshi, Itami-shi, Hyogo 664-0847 (JP)
(74) Representative: Prüfer & Partner mbB Patentanwälte · Rechtsanwälte

(56) References cited:
- EP-A1- 0 382 645
- WO-A1-2016/133780
- DE-A1- 102016 211 531
- JP-A- 2003 004 084
- JP-A- S63 279 911

## Description

### [Technical Field]

The present invention relates to an extensible member that allows abnormal noise during extension and contraction to be less likely to occur.

### [Background Art]

There has been known an extensible member that includes a tubular extensible portion made of a thermoplastic elastomer having an inner peripheral surface and an outer peripheral surface in a bellows shape. For example, JP S63 279911 A and JP 2003 004084 A disclose a bound bumper for automobile and a dust cover, respectively, according to the preamble of claim 1. EP 0382645 A1 and WO 2016/133780 A1 disclose a Stroke-limiting thrust bearing and a jounce bumper, respectively, but does not disclose at least the feature of claim 1 that the plurality of first protrusions and the second protrusions are disposed separately in alternation in a circumferential direction on the first contact surfaces and the second contact surfaces contactable with one another. Further, JP 2016 223632 A (Patent Literature 1) discloses that the extensible member is a bump stopper disposed between a cylinder of a shock absorber and a bracket secured to a piston rod projecting from the cylinder. The bump stopper absorbs an impact of the shock absorber during a large contraction by extension and contraction of an extensible portion. In the extensible member disclosed in Patent Literature 1, roots of an inner peripheral surface of the extensible portion are positioned radially inward of all crests of an outer peripheral surface of the extensible portion. Crests of the inner peripheral surface of the extensible portion are positioned radially inward of all roots of the outer peripheral surface of the extensible portion. This is because to facilitate deformation of the extensible portion made of a thermoplastic elastomer.

### [Summary of Invention]

### [Technical Problem]

However, in the conventional technique, when the extensible portion is contracted and the extensible portion is folded with the roots of the inner peripheral surface and the roots of the outer peripheral surface as fulcrums, two surfaces opposed in an axis direction are brought into close contact. The conventional technique has a problem that air is less likely to enter between the two surfaces in close contact when the two surfaces in close contact are separated at once, and therefore abnormal noise is likely to occur.

The present invention has been made to solve the above-described problem. An object of the present invention is to provide an extensible member that allows abnormal noise during extension and contraction of an extensible portion to be less likely to occur.

### [Solution to Problem]

The above mentioned object is achieved by the extensible member according to claim 1.

The protrusion includes a plurality of first protrusions that project from the first contact surfaces and a plurality of second protrusions that project from the second contact surfaces. The plurality of respective first protrusions and second protrusions may be disposed at regular intervals around the center axis of the extensible portion. When viewed in the axial direction of the center axis of the extensible portion, all of the first protrusions and the second protrusions may be disposed on an imaginary circle at a predetermined radius around the center axis. The second protrusion may be positioned at a center in a circumferential direction of the first protrusions adjacent in the circumferential direction. The first protrusion may be positioned at a center in the circumferential direction of the second protrusions adjacent in the circumferential direction.

### [Advantageous Effects of Invention]

With the extensible member according to claim 1, the inner crests are positioned radially inward of all of the outer roots, and the inner roots are positioned radially inward of all of the outer crests. The extensible portion made of the thermoplastic elastomer is likely to axially contract such that the extensible portion is folded with the inner roots and the outer roots as fulcrums. When the extensible portion is folded, the first contact surfaces attempt to be in close contact with the second contact surfaces. However, since the at least one protrusion is positioned on at least one of the first contact surfaces and the second contact surfaces, the first contact surfaces and the second contact surfaces are less likely to be in close contact around the protrusion. When the first contact surface and the second contact surface are separated at once after being in close contact, the extensible member allows facilitating an entrance of air between the first contact surface and the second contact surface from around the protrusion. The extensible member allows abnormal noise during extension and contraction of the extensible portion to be less likely to occur.

According to the extensible member as defined by claim 1, during the extension and contraction of the extensible portion, a way of deformation of the first contact surface and a way of deformation of the second contact surface can be close to be uniform. The concentration of stress on one of the first contact surface or the second contact surface can be suppressed. The extensible member allows further suppressing the reduction in durability of the extensible portion caused by disposing the protrusions.

According to the extensible member according to claim 2, during the extension and contraction of the extensible portion, an amount of deformation of the outer portion becomes smaller than an amount of deformation of the inner portion. The protrusion is positioned on the outer portion where the amount of deformation is small. Although depending on a size of the protrusion, compared with a case where the protrusion is positioned on the inner portion where the amount of deformation is large, the extensible member allows stress to be less likely to concentrate on the extensible portion around the protrusion during the extension and contraction of the extensible portion. In addition to the effect of claim 1, the extensible member allows suppressing reduction in durability of the extensible portion caused by disposing the protrusion.

The protrusion is positioned on the outer portion at a position separated radially outward from the outer root with respect to the inner portion. The extensible member allows facilitating quick entrance of air between the first contact surface and the second contact surface with the protrusion during the extension and contraction of the extensible portion. The extensible member allows abnormal noise during the extension and contraction of the extensible portion to be more less likely to occur.

According to the extensible member according to claim 3, when the extensible portion extends after the contraction, the perpendicular portions in contact are likely to be separated from radially inward first. Since the protrusion is positioned on the perpendicular portion, air is likely to enter radially inward of the perpendicular portion during the extension of the extensible portion. In addition to the effect of claim 2, the extensible member allows abnormal noise during the extension and contraction of the extensible portion to be more less likely to occur.

In the extensible member according to claim 4, the protrusions are disposed in rotational symmetry with respect to the center axis of the extensible portion. A way of the deformation of the extensible portion is close to be uniform over the circumferential direction. The stress is less likely to concentrate on a part in the circumferential direction of the extensible portion during the extension and contraction. In addition to the effect of any of claims 1 to 3, the extensible member allows further suppressing the reduction in durability of the extensible portion caused by disposing the protrusion.

With the extensible member according to claim 5, a circumferential dimension of the protrusion is larger than a radial dimension of the protrusion. During the contraction of the extensible portion, the first contact surfaces and the second contact surfaces are less likely to be in close contact at a further wide range. During the contraction of the extensible portion, the amounts of deformations of the first contact surface and the second contact surface are likely to differ according to radial positions. Compared with a case where the radial dimension of the protrusion is larger than the circumferential dimension of the protrusion, the extensible member allows decreasing the difference in amount of deformation of the protrusions in length directions of the protrusions. The extensible member allows suppressing the concentration of stress around a part of the protrusion in the length direction during the extension and contraction of the extensible portion. In addition to the effect of any of claims 1 to 4, the extensible member allows further suppressing the reduction in durability of the extensible portion caused by disposing the protrusions.

### [Brief Description of Drawings]

[Fig. 1] Fig. 1 is a cross-sectional view of a stopper unit that includes an extensible member in a first embodiment.
[Fig. 2] Fig. 2 is a partially enlarged cross-sectional view of the stopper unit that enlarges a part II of Fig. 1.
[Fig. 3] Fig. 3 is a front view of the extensible member.
[Fig. 4] Fig. 4 is a cross-sectional view of the extensible member along the line IV-IV of Fig. 3.
[Fig. 5] Fig. 5 is a partial cross-sectional view of an extensible member in a second embodiment.
[Fig. 6] Fig. 6(a) is a cross-sectional view of the extensible member along the line VIa-VIa of Fig. 5, and Fig. 6(b) is a cross-sectional view of the extensible member along the line VIb-VIb of Fig. 6(a).
[Fig. 7] Fig. 7(a) is a partial cross-sectional view of an extensible member in an example, and Fig. 7(b) is a cross-sectional view of the extensible member taken along a first protrusion.
[Fig. 8] Fig. 8 is a front view of an extensible member in a further example.
[Fig. 9] Fig. 9 is a cross-sectional view of the extensible member along the line IX-IX of Fig. 8.

### [Description of Embodiments]

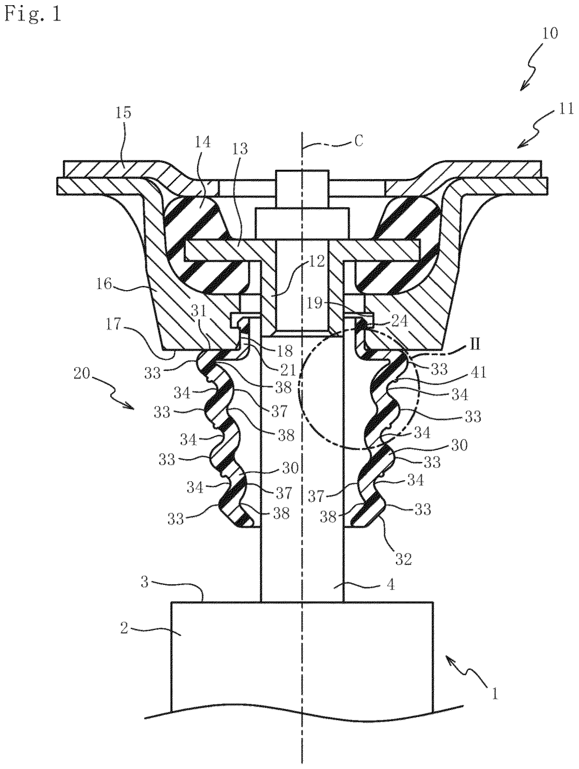

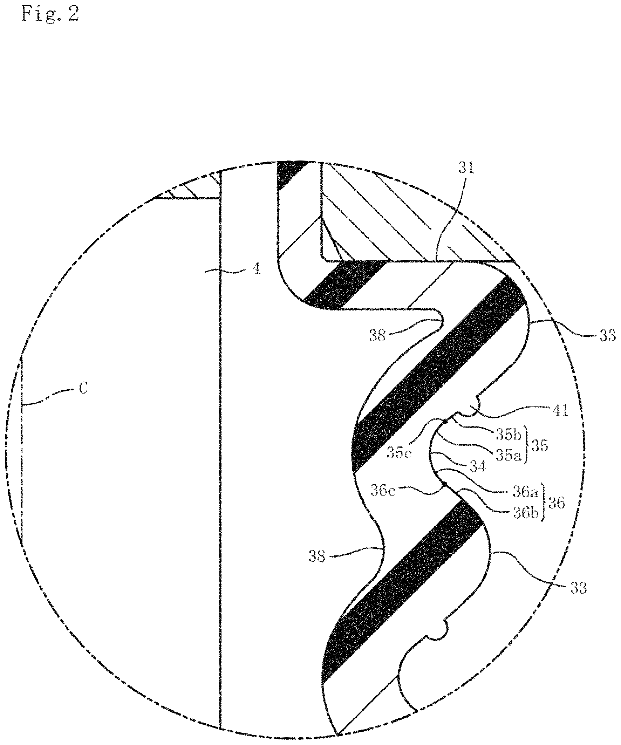

Preferred embodiments will be described below with reference to the attached drawings. A stopper unit 10 that includes an extensible member 20 and a shock absorber 1 in a first embodiment will be described with reference to Fig. 1 and Fig. 2. Fig. 1 is a cross-sectional view that includes a center axis C of a piston rod 4 of the shock absorber 1 and a cross-sectional view of the stopper unit 10 mounted to the shock absorber 1. Fig. 2 is a partially enlarged cross-sectional view of the stopper unit 10 that enlarges a part II of Fig. 1.

As illustrated in Fig. 1 and Fig. 2, the shock absorber 1 is a part of a suspension that mainly connects a wheel (not illustrated) and a vehicle body (not illustrated). The suspension is to buffer vibrations from the wheel to the vehicle body. The shock absorber 1 attenuates vibrations of a coil spring (not illustrated), which absorbs an impact from the wheel, while supporting the vehicle body. The shock absorber 1 mainly includes a cylinder 2 and the piston rod 4. The cylinder 2 is mounted on the wheel side. The piston rod 4 projects from an axial end surface 3 of the cylinder 2. In the shock absorber 1, in accordance with a load input from the wheel, an amount of projection of the piston rod 4 from the cylinder 2 changes and extends and contracts to attenuate the vibrations.

The stopper unit 10 includes a tubular bracket 11 and a tubular extensible member (stopper) 20. The piston rod 4 is mounted to the bracket 11. The extensible member 20 is mounted on the cylinder 2 side of the bracket 11. The bracket 11 includes a cylinder portion 12, a circular plate portion 13, an elastic portion 14, and a first fixture 15 and a second fixture 16. A distal end of the piston rod 4 is secured to the cylinder portion 12. The circular plate portion 13 projects radially outward from the cylinder portion 12. The elastic portion 14 is formed of an elastic body, such as rubber and a thermoplastic elastomer. The elastic portion 14 surrounds a peripheral area of the circular plate portion 13. The elastic portion 14 is axially sandwiched by the respective first fixture 15 and second fixture 16.

The first fixture 15 and the second fixture 16 are metallic members secured to the vehicle body side. The first fixture 15 is a plate material positioned on a side opposite to the cylinder 2 with respect to the elastic portion 14. The second fixture 16 is a tubular body that surrounds the cylinder 2 side and radially outward of the elastic portion 14 to support the elastic portion 14.

The second fixture 16 includes an annular contact surface 17 and a press-fitted surface 18. The contact surface 17 is an axial end surface on the cylinder 2 side. The contact surface 17 is formed to be approximately perpendicular to the center axis C and faces the axial end surface 3 of the cylinder 2. The extensible member 20 is compressed in the axis direction between the contact surface 17 and the axial end surface 3.

The press-fitted surface 18 is an inner peripheral surface from an inner peripheral edge of the contact surface 17 toward the elastic portion 14. The press-fitted surface 18 is formed to be parallel to the center axis C on a cross-sectional surface including the center axis C. That is, the approximately entire press-fitted surface 18 is formed to be approximately perpendicular to the contact surface 17. The press-fitted surface 18 is concentrically disposed at a predetermined space from the piston rod 4 and the cylinder portion 12. To the press-fitted surface 18, a mounting portion 21, which will be described later, of the extensible member 20 is press-fitted. A fitting recessed portion 19 to which a claw portion 24 of the mounting portion 21 is fitted is disposed at the approximately center in the axis direction on the press-fitted surface 18.

The extensible member 20 is a tubular member disposed between the cylinder 2 and the bracket 11 so as to surround an outer periphery of the piston rod 4. The extensible member 20 is formed in an annular shape around the center axis C on a cross-sectional surface perpendicular to the center axis C. That is, the center axis C of the piston rod 4 is also the center axis of the extensible member 20.

The extensible member 20 is a member made of a thermoplastic elastomer in which respective portions are integrally formed. A kind of the thermoplastic elastomer forming the extensible member 20 is determined according to a hard segment significantly contributing to properties of the thermoplastic elastomer. Examples of the kind of the thermoplastic elastomer include a styrene base, an olefin base, a diene base, a vinyl chloride base, a urethane base, an ester base, an amide base, and a fluorine base. The thermoplastic elastomer of this embodiment is a block copolymer of a hard segment of an ester base (for example, polybutylene terephthalate) and a soft segment of aliphatic polyether (for example, polytetramethylene ether glycol). A commercially available thermoplastic elastomer used for the thermoplastic elastomer of this embodiment includes, for example, "Hytrel" (registered trademark) manufactured by DU PONT-TORAY CO., LTD.

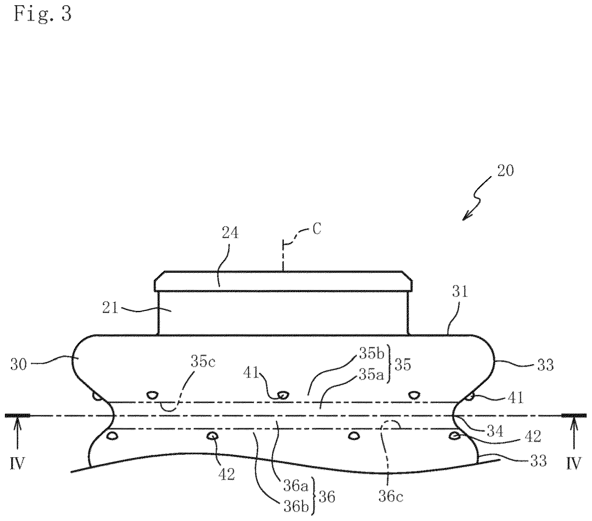

With the extensible member 20, the extensible member 20 is sandwiched between the axial end surface 3 of the cylinder 2 and the contact surface 17 of the bracket 11 during large contraction of the shock absorber 1 and compressed in the axis direction to absorb an impact during the compression by an elastic force from the extensible member 20. The extensible member 20 includes the approximately cylindrically-shaped mounting portion 21, a tubular extensible portion 30, and a plurality of first protrusions 41 and second protrusions 42 (see Fig. 3). The mounting portion 21 is configured to be fitted to the press-fitted surface 18 on the second fixture 16 by press-fitting. The extensible portion 30 is continuous with an end portion in the axis direction on the cylinder 2 side of the mounting portion 21. The plurality of first protrusions 41 and second protrusions 42 project from an outer peripheral surface of the extensible portion 30.

The mounting portion 21 includes the claw portion 24 that projects radially outward from an outer peripheral surface of a distal end in the axis direction on the side opposite to the extensible portion 30. The claw portion 24 is a part discontinuously disposed in a circumferential direction of the mounting portion 21. By fitting the claw portion 24 to the fitting recessed portion 19 on the press-fitted surface 18, the mounting portion 21 is less likely to come off from the bracket 11.

The extensible portion 30 is a part axially compressed between the axial end surface 3 of the cylinder 2 and the contact surface 17 of the bracket 11 to absorb an impact. The outer peripheral surface and the inner peripheral surface of the extensible portion 30 are formed in a bellows shape in which a plurality of mountains and troughs are continuous in the axis direction. The outer peripheral surface of the extensible portion 30 is provided with an end surface 31 in the axis direction, a pressure receiving surface 32, a plurality of outer crests 33 as crests of mountains, a plurality of outer roots 34 as bottoms of the troughs, and first contact surfaces 35 and second contact surfaces 36 between the outer crests 33 and the outer roots 34.

The end surface 31 is continuous with the outer peripheral surface of the mounting portion 21 so as to project radially outward from the mounting portion 21. The end surface 31 is a surface pressed against the contact surface 17 of the bracket 11 during large contraction of the shock absorber 1 to be brought into close contact with the contact surface 17. The mounting portion 21 axially projects from the end surface 31. The pressure receiving surface 32 is a surface that can be in contact with the axial end surface 3 of the cylinder 2. The pressure receiving surface 32 is a surface that is in surface contact with the axial end surface 3 of the cylinder 2 during large contraction of the shock absorber 1 to be brought into close contact with the axial end surface 3.

The inner peripheral surface of the extensible portion 30 includes a plurality of inner crests 37 as crests of mountains and a plurality of inner roots 38 as bottoms of troughs. The respective inner crests 37 are positioned radially inward of all of the outer roots 34. The respective inner roots 38 are positioned radially inward of all of the outer crests 33. That is, in an imaginary plane perpendicular to the center axis C, the inner root 38 is always positioned on the imaginary plane where the outer crest 33 is positioned. The inner crest 37 is always positioned on the imaginary plane where the outer root 34 is positioned.

According to the positional relationship between the respective parts, the extensible portion 30 axially contracts such that the extensible portion 30 is folded with the inner roots 38 and the outer roots 34 as fulcrums. Generally, even when the extensible portion 30 is formed with the thermoplastic elastomer harder than rubber and foam synthetic resin, the extensible portion 30 is likely to axially contract.

In this embodiment, a distance from the center axis C to the plurality of outer crests 33 decreases from the end surface 31 side to the pressure receiving surface 32 side. A distance from the center axis C to the plurality of outer roots 34, a distance from the center axis C to the plurality of inner crests 37, and a distance from the center axis C to the plurality of inner roots 38 each decrease toward the pressure receiving surface 32 side.

The outer root 34 and the inner root 38 are point-like on the cross-sectional surface including the center axis C. The first contact surface 35 and the second contact surface 36 are parts contactable with one another when the extensible portion 30 axially contracts. A part continuous with the end surface 31 side of the outer root 34 is the first contact surface 35. A part continuous with the pressure receiving surface 32 side of the outer root 34 is the second contact surface 36. The outer crest 33 and the inner crest 37 are parts not in contact with one another when the extensible portion 30 axially contracts and are formed of convex curved lines on the cross-sectional surface including the center axis C.

The first contact surface 35 includes an inner portion 35a and an outer portion 35b. The inner portion 35a is continuous with the whole circumference of the outer root 34. The inner portion 35a is formed of a concave curved line on the cross-sectional surface including the center axis C. The outer portion 35b connects the whole circumference of the inner portion 35a and the whole circumference of the outer crest 33. The outer portion 35b is formed of a convex curved line on the cross-sectional surface including the center axis C. A boundary 35c as an inflection point between the inner portion 35a and the outer portion 35b is continuous over the whole circumference of the outer peripheral surface of the first contact surface 35.

Similarly, the second contact surface 36 includes an inner portion 36a and an outer portion 36b. The inner portion 36a is continuous with the outer root 34 and formed of a concave curved line on the cross-sectional surface including the center axis C. The outer portion 36b connects the inner portion 36a and the outer crest 33 and is formed of a convex curved line on the cross-sectional surface including the center axis C. A boundary 36c as an inflection point between the inner portion 36a and the outer portion 36b is continuous over the whole circumference of the outer peripheral surface of the second contact surface 36.

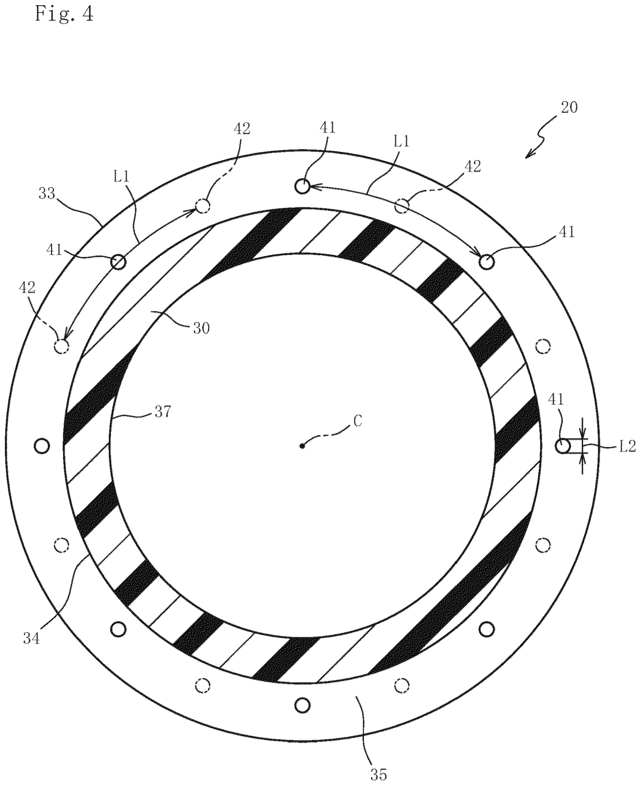

Next, the first protrusions 41 and the second protrusions 42 will be described with reference to Fig. 3 and Fig. 4. Fig. 3 is a front view of the extensible member 20. Fig. 4 is a cross-sectional view of the extensible member 20 along the line IV-IV of Fig. 3. Fig. 3 omits the illustration of a part of the extensible portion 30 in the axis direction (a part on the pressure receiving surface 32 side). Fig. 3 illustrates the boundaries 35c, 36c by the two-dot chain lines.

As illustrated in Fig. 3 and Fig. 4, the first protrusion 41 projects from the outer portion 35b, which is positioned radially outward with respect to the boundary 35c in the first contact surface 35. The second protrusion 42 projects from the outer portion 36b, which is positioned radially outward with respect to the boundary 36c in the second contact surface 36. The first protrusions 41 and the second protrusions 42 are integrally molded with the extensible portion 30. The first protrusion 41 and the second protrusion 42 are formed in an approximately hemispherical shape having shapes and dimensions same as one another. That is, a diameter L2 of the hemisphere is approximately same as radial dimensions and circumferential dimensions of the first protrusion 41 and the second protrusion 42.

The eight first protrusions 41 are disposed at regular intervals in the circumferential direction around the center axis C and disposed in rotational symmetry with respect to the center axis C. Similarly, the eight second protrusions 42 are disposed at regular intervals in the circumferential direction around the center axis C and disposed in rotational symmetry with respect to the center axis C. The respective first protrusion 41 and second protrusion 42 have the same radial distance from the center axis C. That is, all of the first protrusions 41 and the second protrusions 42 are disposed on an imaginary circle at a predetermined radius around the center axis C.

An interval L1 between the first protrusions 41 adjacent in the circumferential direction and the interval L1 of the second protrusions 42 adjacent in the circumferential direction are same. The second protrusion 42 is positioned at the center in the circumferential direction of the first protrusions 41 adjacent in the circumferential direction. The first protrusion 41 is positioned at the center in the circumferential direction of the second protrusions 42 adjacent in the circumferential direction. That is, the first protrusions 41 and the second protrusions 42 are disposed separately in the circumferential direction in alternation. The intervals of the first protrusions 41 and the second protrusions 42 adjacent in the circumferential direction are also the same over the whole circumference.

With the extensible member 20 as described above, the inner crests 37 are positioned radially inward of all of the outer roots 34 and the inner roots 38 are positioned radially inward of all of the outer crests 33. The extensible portion 30 made of a thermoplastic elastomer is likely to axially contract such that the extensible portion 30 is folded with the inner roots 38 and the outer roots 34 as fulcrums. When the extensible portion 30 is folded, the first contact surfaces 35 attempt to be in close contact with the second contact surfaces 36. When the first contact surfaces 35 are separated from the second contact surfaces 36 at once after being in close contact, in a case where air is less likely to enter between the first contact surfaces 35 and the second contact surfaces 36, abnormal noise is likely to occur in accordance with the extension and contraction of the extensible portion 30.

In this embodiment, the first protrusion 41 and the second protrusion 42 project from the first contact surface 35 and the second contact surface 36, respectively. The first contact surface 35 and the second contact surface 36 are less likely to be in close contact around the first protrusion 41 and the second protrusion 42. When a part of the first contact surface 35 and the second contact surface 36 are separated at once after being in close contact, the extensible member 20 allows facilitating the entrance of air between the first contact surface 35 and the second contact surface 36 from around the first protrusion 41 and the second protrusion 42. The extensible member 20 allows abnormal noise during the extension and contraction of the extensible portion 30 to be less likely to occur.

Note that, in contrast to the conventional extensible member without the first protrusions 41 or the second protrusions 42, stress is likely to concentrate on parts (the first contact surfaces 35 and the second contact surfaces 36) between which the first protrusions 41 and the second protrusions 42 are interposed in the extensible portion 30 during the extension and contraction of the extensible portion 30 in the extensible member 20 in some cases. During the extension and contraction of the extensible portion 30, as an amount of deformation of the parts where the first protrusions 41 and the second protrusions 42 are disposed becomes large, the first protrusions 41 and the second protrusions 42 also largely deform. Stress is likely to concentrate on the extensible portion 30 around the first protrusions 41 and the second protrusions 42.

When the extensible portion 30 contracts by being folded with the outer roots 34 as the fulcrums, the amount of deformation of the inner portions 35a, 36a formed of the concave curved lines becomes smaller than the amount of deformation of the outer portions 35b, 36b formed of the convex curved lines. In this embodiment, the first protrusion 41 and the second protrusion 42 are disposed in the outer portions 35b, 36b, respectively. Compared with a case where the first protrusion 41 and the second protrusion 42 are disposed in the inner portions 35a, 36a where the amount of deformation is large, the extensible member 20 can suppress the concentration of stress around the first protrusion 41 and the second protrusion 42 during the extension and contraction of the extensible portion 30. The extensible member 20 allows suppressing reduction in durability of the extensible portion 30 caused by disposing the first protrusions 41 and the second protrusions 42.

Especially, in the thermoplastic elastomer used in this embodiment, a large strain is likely to remain (plastic deformation is likely to occur) during a contraction for the first time after molding, compared with rubber. After the first contraction of the extensible portion 30 made of a thermoplastic elastomer, an amount of plastic deformation of the inner portions 35a, 36a, which easily deform during the extension and contraction, is large and the amount of plastic deformation of the outer portions 35b, 36b, which are less likely to deform during the extension and contraction, is small.

The first protrusion 41 and the second protrusion 42 are disposed in the outer portions 35b, 36b, respectively, where the amount of plastic deformation is small. The way of deformation of the extensible portion 30 after the plastic deformation is less likely to change according to the presence/absence of the first protrusion 41 and the second protrusion 42. A buffering property and durability of the extensible portion 30 according to the way of deformation become approximately similar between the cases where the first protrusions 41 and the second protrusions 42 are present and absent. Using the extensible portion 30 designed for the conventional extensible member in which the first protrusions 41 and the second protrusions 42 are absent, the buffering property and durability of the extensible portion 30 of the extensible member 20 including the first protrusions 41 and the second protrusions 42 can be easily set.

The outer portions 35b, 36b are positioned separately from the outer root 34 outward in the radial direction. When the extensible portion 30 extends after contraction, the first contact surface 35 is separated from the second contact surface 36 in the order from radially outward in many cases. That is, the first contact surface 35 is separated from the second contact surface 36 in the order from the outer portions 35b, 36b and the inner portions 35a, 36a in many cases. By providing the first protrusions 41 and the second protrusions 42 in the outer portions 35b, 36b, air is likely to quickly enter between the first contact surfaces 35 and the second contact surfaces 36 by the first protrusions 41 and the second protrusions 42. The extensible member 20 allows abnormal noise during the extension and contraction of the extensible portion 30 to be more less likely to occur.

In the extensible member 20, the respective first protrusions 41 and second protrusions 42 are disposed in rotational symmetry with respect to the center axis C. The way of deformation of the extensible portion 30 during the extension and contraction is close to be uniform over the circumferential direction. The concentration of stress at a part of the extensible portion 30 in the circumferential direction during the extension and contraction can be suppressed. The extensible member 20 allows further suppressing the reduction in durability of the extensible portion 30 caused by disposing the first protrusions 41 and the second protrusions 42.

The respective radial distances from the center axis C to the plurality of first protrusions 41 and second protrusions 42 are same. The extensible member 20 allows the way of deformation of the extensible portion 30 to be further close to be uniform over the circumferential direction. The plurality of respective first protrusions 41 and second protrusions 42 are disposed at regular intervals in the circumferential direction. The extensible member 20 allows the way of deformation of the extensible portion 30 to be further close to be uniform over the circumferential direction.

The plurality of first protrusions 41 and second protrusions 42 are disposed separately in the circumferential direction in alternation in the first contact surfaces 35 and the second contact surfaces 36 contactable with one another. During the extension and contraction of the extensible portion 30, the way of deformation of the first contact surface 35 and the way of deformation of the second contact surface 36 are close to be uniform. The concentration of stress on one of the first contact surface 35 or the second contact surface 36 can be suppressed. The extensible member 20 allows further suppressing the reduction in durability of the extensible portion 30 caused by disposing the first protrusions 41 and the second protrusions 42.

In the extensible member 20, the interval L1 between the first protrusions 41 is the same as the interval L1 between the second protrusions 42. The way of deformation of the first contact surface 35 and the way of deformation of the second contact surface 36 during the extension and contraction of the extensible portion 30 are further close to be uniform. The first protrusion 41 and the second protrusion 42 have the shapes and dimensions same as one another. With the extensible member 20, the way of deformation of the first contact surface 35 and the way of deformation of the second contact surface 36 during the extension and contraction of the extensible portion 30 can be further close to be uniform.

The radial distances from the center axis C to all of the first protrusions 41 and the second protrusions 42 are same, and the intervals between the first protrusions 41 and the second protrusions 42 are same over the whole circumference. With the extensible member 20, the way of deformation of the first contact surfaces 35 and the way of deformation of the second contact surfaces 36 during the extension and contraction of the extensible portion 30 can be close to be uniform over the circumferential direction.

The first protrusion 41 and the second protrusion 42 are formed in the approximately hemispherical shape in which the circumferential dimensions L2 and the radial dimensions L2 are same. In the extensible member 20, compared with a case where the first protrusion 41 and the second protrusion 42 have the circumferential dimensions greater than the radial dimensions, when the first protrusion 41 and the second protrusion 42 are separated from the first contact surface 35 and the second contact surface 36 at once after being in close contact, air can quickly enter between the first contact surface 35 and the second contact surface 36. This is because that air goes around both sides in the circumferential direction of the first protrusion 41 and the second protrusion 42 and quickly enters between the first contact surface 35 and the second contact surface 36 in the center axis C side of the first protrusion 41 and the second protrusion 42. The extensible member 20 allows abnormal noise during the extension and contraction to be more less likely to occur.

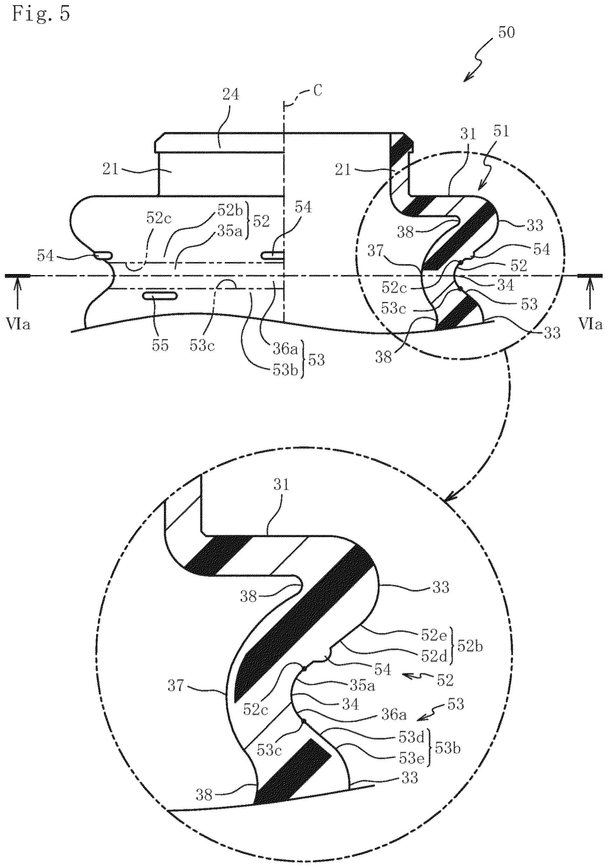

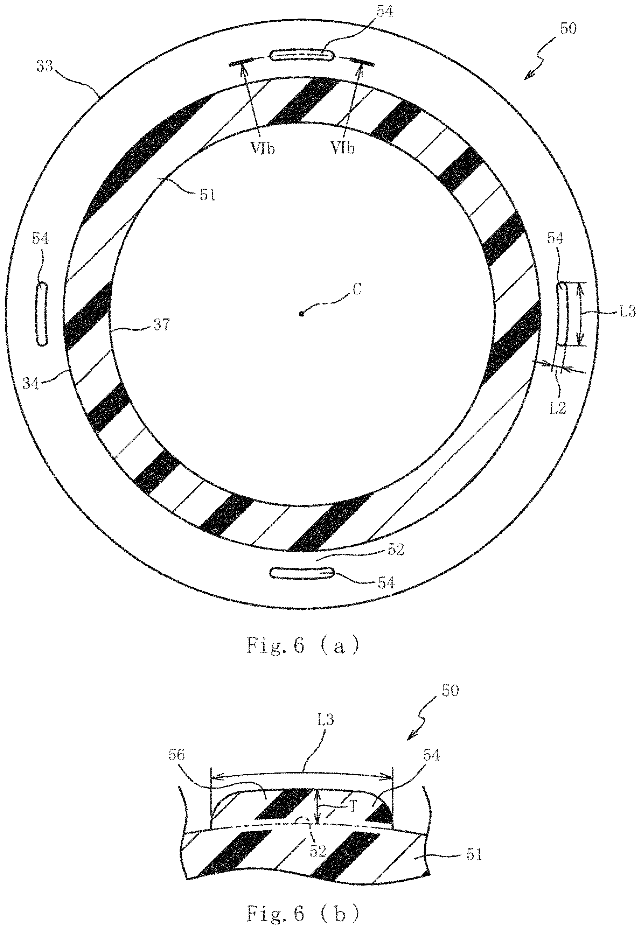

A second embodiment will be described with reference to Fig. 5, Fig. 6(a), and Fig. 6(b). In the first embodiment, the case where the first protrusion 41 and the second protrusion 42 have the approximately hemispherical shape has been described. In the second embodiment, a case where a circumferential dimension L3 of a first protrusion 54 and a second protrusion 55 is formed larger than the radial dimension L2 of the first protrusion 54 and the second protrusion 55 will be described. Same reference numerals are given to parts same as those of the first embodiment and the description thereof will be omitted.

Fig. 5 is a partial cross-sectional view of an extensible member 50 in the second embodiment. In Fig. 5, the right side with respect to the center axis C in the paper is the cross-sectional view of the extensible member 50 and the left side with respect to the center axis C in the paper is a front view of the extensible member 50. Fig. 6(a) is a cross-sectional view of the extensible member 50 along the line VIa-VIa of Fig. 5. Fig. 6(b) is a cross-sectional view of the extensible member 50 along the line VIb-VIb of Fig. 6(a). Fig. 6(b) illustrates a first contact surface 52 at a part from which the first protrusion 54 projects by the two-dot chain line.

As illustrated in Fig. 5, the extensible member 50 includes the mounting portion 21, a tubular extensible portion 51 continuous with the end portion in the axis direction of the mounting portion 21, and the plurality of first protrusions 54 and second protrusions 55 projecting from an outer peripheral surface of the extensible portion 51. The extensible member 50 is a member made of a thermoplastic elastomer in which respective portions are integrally formed. The extensible member 50 is sandwiched between the axial end surface 3 of the cylinder 2 and the contact surface 17 of the bracket 11 and compressed in the axis direction to absorb an impact during compression by an elastic force from the extensible member 50.

An outer peripheral surface of the extensible portion 51 is provided with the end surface 31, the pressure receiving surface 32, the outer crests 33, the outer roots 34, and first contact surfaces 52 and second contact surfaces 53 that connect the outer crests 33 and the outer roots 34. An inner peripheral surface of the extensible portion 51 is provided with the inner crests 37 and the inner roots 38. The first contact surface 52 and the second contact surface 53 are parts contactable with one another when the extensible portion 51 axially contracts. A part continuous with the end surface 31 side of the outer root 34 is the first contact surface 52. A part continuous with the pressure receiving surface 32 side of the outer root 34 is the second contact surface 53.

The first contact surface 52 includes the inner portion 35a continuous with the whole circumference of the outer root 34 and an outer portion 52b that connects the whole circumference of the inner portion 35a and the whole circumference of the outer crest 33. The outer portion 52b includes a planar portion 52d continuous with the inner portion 35a and a convex surface portion 52e that connects the planar portion 52d and the outer crest 33. The planar portion 52d is formed of a straight line on the cross-sectional surface including the center axis C. The convex surface portion 52e is formed of a convex curved line on the cross-sectional surface including the center axis C.

The second contact surface 53 includes the inner portion 36a continuous with the whole circumference of the outer root 34 and an outer portion 53b that connects the whole circumference of the inner portion 36a and the whole circumference of the outer crest 33. The outer portion 53b includes a planar portion 53d continuous with the inner portion 36a and a convex surface portion 53e that connects the planar portion 53d and the outer crest 33. The planar portion 53d is formed of a straight line on the cross-sectional surface including the center axis C. The convex surface portion 53e is formed of a convex curved line on the cross-sectional surface including the center axis C. Boundaries 52c, 53c between the inner portions 35a, 36a and the outer portions 52b, 53b are continuous over the whole circumference of the outer peripheral surface of the extensible portion 51 and indicated by the two-dot chain lines in Fig. 5.

The first protrusion 54 projects from the planar portion 52d in the outer portion 52b of the first contact surface 52. The second protrusion 55 projects from the planar portion 53d in the outer portion 53b of the second contact surface 53. The first protrusions 54 and the second protrusions 55 are integrally molded with the extensible portion 51.

As illustrated in Fig. 6(a), the first protrusions 54 are arc-shaped parts around the center axis C. Specifically, the first protrusion 54 is formed by extending the hemispherical first protrusion 41 of the first embodiment in the circumferential direction with the radial dimension L2 of the first protrusion 41 maintained. The four first protrusions 54 are disposed at regular intervals in the circumferential direction around the center axis C and disposed in rotational symmetry with respect to the center axis C. Respective radial distances from the center axis C to the plurality of first protrusions 54 are same.

As illustrated in Fig. 5, the second protrusion 55 is disposed at the center in the circumferential direction of the first protrusions 54 adjacent in the circumferential direction. Similarly to the first protrusions 54, the second protrusions 55 are formed in an arc shape around the center axis C. The four second protrusions 55 are disposed at regular intervals in the circumferential direction around the center axis C and disposed in rotational symmetry with respect to the center axis C. Respective radial distances from the center axis C to the plurality of second protrusions 55 are same.

The radial distance from the center axis C to the first protrusion 54 and the radial distance from the center axis C to the second protrusion 55 are mutually same. An interval between the first protrusions 54 adjacent in the circumferential direction and an interval between the second protrusions 55 adjacent in the circumferential direction are same. The first protrusions 54 and the second protrusions 55 are disposed to be separated in the circumferential direction in alternation. The intervals of the first protrusions 54 and the second protrusions 55 adjacent in the circumferential direction are also the same over the whole circumference.

The first protrusion 54 and the second protrusion 55 project from the outer portions 52b, 53b where the amount of deformation during the extension and contraction of the extensible portion 51 is small, respectively. Similarly to the first embodiment, the extensible member 50 allows abnormal noise during the extension and contraction to be less likely to occur with the first protrusions 54 and the second protrusions 55 and allows suppressing the reduction in durability of the extensible portion 51 caused by disposing the first protrusions 54 and the second protrusions 55.

Since the planar portions 52d, 53d are the straight lines on the cross-sectional surface including the center axis C, the planar portion 52d and the planar portion 53d are likely to be in close contact during the contraction of the extensible portion 51. By disposing the first protrusion 54 and the second protrusion 55 in the planar portions 52d, 53d, the planar portions 52d, 53d are less likely to be in close contact during the contraction of the extensible portion 51. The extensible member 50 allows abnormal noise during the extension and contraction to be more less likely to occur.

The shape and dimensions of the first protrusion 54 will be described in further detail with reference to Fig. 6(a) and Fig. 6(b). Since the shape and the dimensions of the second protrusion 55 are same as the shape and the dimensions of the first protrusion 54, a part of the description of the shape and the dimensions of the second protrusion 55 will be omitted.

As illustrated in Fig. 6(a) and Fig. 6(b), the arc-shaped first protrusion 54 around the center axis C has the circumferential dimension L3 larger than the radial dimension L2. During the contraction of the extensible portion 51, the first contact surfaces 52 and the second contact surfaces 53 are less likely to be in close contact at a further wide range. In the extensible member 50, compared with the hemispherical first protrusions 41 and second protrusions 42 as in the first embodiment, abnormal noise during the extension and contraction of the extensible portion 51 can be sufficiently less likely to occur while the numbers of the first protrusions 54 and the second protrusions 55 are reduced.

In the first embodiment, a local load is applied by point from the first protrusion 41 and the second protrusion 42 to the first contact surface 35 and the second contact surface 36. In the extensible member 50 of the second embodiment, a linear load is applied from the first protrusion 54 and the second protrusion 55 to the first contact surface 52 and the second contact surface 53. The extensible member 50 allows facilitating a dispersion of the load applied from the first protrusion 54 and the second protrusion 55 to the first contact surface 52 and the second contact surface 53. That is, concentration of stress on the extensible portion 51 around the first protrusions 54 and the second protrusions 55 can be suppressed. The extensible member 50 can ensure the durability of the extensible portion 51.

During the extension and contraction of the extensible portion 51, amounts of deformation of the first contact surface 52 and the second contact surface 53 are likely to differ according to radial positions from the center axis C. When the radial dimensions L2 of the first protrusion 54 and the second protrusion 55 are larger than the circumferential dimensions L3 of the first protrusion 54 and the second protrusion 55, the amounts of deformation of the first protrusion 54 and the second protrusion 55 are likely to differ according to positions in length directions of the first protrusion 54 and the second protrusion 55. Stress is likely to concentrate on the extensible portion 51 around the part where the amount of deformation is large among the first protrusion 54 and the second protrusion 55, and the durability of the extensible portion 51 is reduced. Plastic deformation of the extensible portion 51 in accordance with cyclic deformation becomes large from the peripheral area of the part where the amount of deformation is large among the first protrusion 54 and the second protrusion 55. The durability of the extensible portion 51 is reduced and the buffering property is deteriorated.

In this embodiment, the circumferential dimension L3 of the first protrusion 54 and the second protrusion 55 is larger than the radial dimension L2 of the first protrusion 54 and the second protrusion 55. Compared with the case where the radial dimension L2 is larger than the circumferential dimension L3, a difference in amount of deformation between the first protrusion 54 and the second protrusion 55 in the length direction decreases. Since the first protrusions 54 and the second protrusions 55 are formed in the arc shape around the center axis C, the difference in amount of deformation between the first protrusion 54 and the second protrusion 55 in the length direction further decreases. The extensible member 50 allows suppressing the concentration of stress around a part of the first protrusion 54 and the second protrusion 55 in the length direction during the extension and contraction of the extensible portion 51. The extensible member 50 allows suppressing the reduction in durability and deterioration of the buffering property of the extensible portion 51.

Fig. 6(b) illustrates a cross-sectional surface along the first protrusion 54 and a cross-sectional surface perpendicular to the first contact surface 52 of a part where the first protrusion 54 is disposed. In the cross-sectional surface of Fig. 6(b), the first protrusion 54 includes a center portion 56 where a thickness T of the first protrusion 54 (a distance from the first contact surface 52 to a distal end of the first protrusion 54) is approximately constant. The center portion 56 is disposed at the center portion in the circumferential direction of the first protrusion 54 and has a circumferential dimension formed to be sufficiently larger than the radial dimension L2 of the first protrusion 54. Similarly, the second protrusion 55 also includes the center portion 56.

An approximately uniform load is applied on the first contact surface 52 and the second contact surface 53 between which the center portion 56 is sandwiched from the center portion 56 over the circumferential direction during the extension and contraction of the extensible portion 51. Since the extensible member 50 allows further facilitating the dispersion of the load applied from the center portion 56 to the first contact surface 52 and the second contact surface 53, the durability of the extensible portion 51 can be improved.

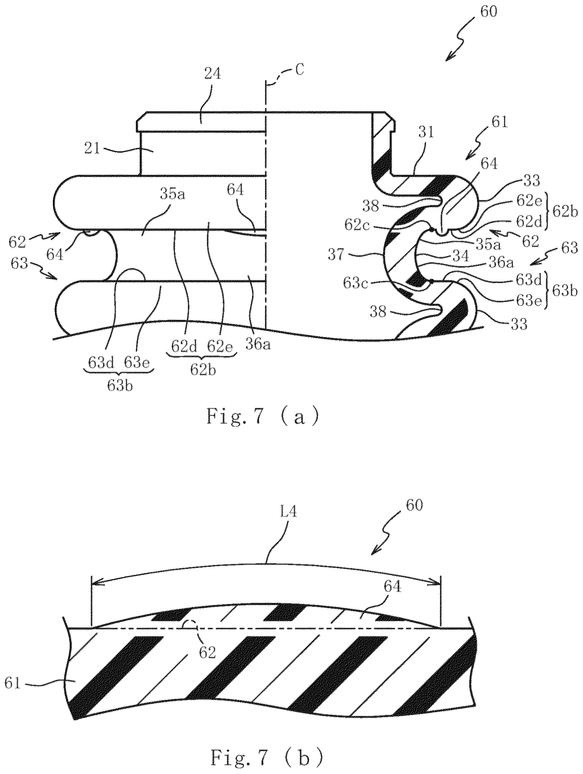

An example will be described with reference to Fig. 7(a) and Fig. 7(b). In the first and second embodiments, the cases where the first protrusions 41, 54 and the second protrusions 42, 55 project from the first contact surfaces 35, 52 and the second contact surfaces 36, 53, respectively, have been described. In the example, a case where protrusions 64 project from only first contact surfaces 62 will be described. Same reference numerals are given to parts same as those of the first embodiment and the description thereof will be omitted.

Fig. 7(a) is a partial cross-sectional view of an extensible member 60 of the example. In Fig. 7 (a), the right side with respect to the center axis C in the paper is the cross-sectional view of the extensible member 60 and the left side with respect to the center axis C in the paper is a front view of the extensible member 60. Fig. 7(b) is cross-sectional view of the extensible member 60 perpendicular to a first contact surface 62 as a part where the protrusion 64 is disposed and taken along the protrusion 64. Fig. 7(b) illustrates the first contact surface 62 as the part from which the protrusion 64 projects by the two-dot chain line.

As illustrated in Fig. 7(a), the extensible member 60 includes the mounting portion 21, a tubular extensible portion 61 continuous with the end portion in the axis direction of the mounting portion 21, and the plurality of protrusions 64 projecting from an outer peripheral surface of the extensible portion 61. The extensible member 60 is a member made of a thermoplastic elastomer in which respective portions are integrally formed. The extensible member 60 is sandwiched between the axial end surface 3 of the cylinder 2 and the contact surface 17 of the bracket 11 and compressed in the axis direction to absorb an impact during compression by an elastic force from the extensible member 60.

An outer peripheral surface of the extensible portion 61 is provided with the end surface 31, the pressure receiving surface 32, the outer crests 33, the outer roots 34, and the first contact surfaces 62 and second contact surfaces 63 that connect the outer crests 33 and the outer roots 34. An inner peripheral surface of the extensible portion 61 is provided with the inner crests 37 and the inner roots 38. The first contact surface 62 and the second contact surface 63 are parts contactable with one another when the extensible portion 61 axially contracts. A part continuous with the end surface 31 side of the outer root 34 is the first contact surface 62. A part continuous with the pressure receiving surface 32 side of the outer root 34 is the second contact surface 63.

The first contact surface 62 includes the inner portion 35a continuous with the whole circumference of the outer root 34 and an outer portion 62b that connects the whole circumference of the inner portion 35a and the whole circumference of the outer crest 33. The outer portion 62b includes a perpendicular portion 62d continuous with the inner portion 35a and a convex surface portion 62e that connects the perpendicular portion 62d and the outer crest 33. The perpendicular portion 62d is formed of a straight line perpendicular to the center axis C on the cross-sectional surface including the center axis C. The convex surface portion 62e is formed of a convex curved line on the cross-sectional surface including the center axis C.

The second contact surface 63 includes the inner portion 36a continuous with the whole circumference of the outer root 34 and an outer portion 63b that connects the whole circumference of the inner portion 36a and the whole circumference of the outer crest 33. The outer portion 63b includes a perpendicular portion 63d continuous with the inner portion 35a and a convex surface portion 63e that connects the perpendicular portion 63d and the outer crest 33. The perpendicular portion 63d is formed of a straight line perpendicular to the center axis C on the cross-sectional surface including the center axis C. The convex surface portion 63e is formed of a convex curved line on the cross-sectional surface including the center axis C. Boundaries 62c, 63c between the inner portions 35a, 36a and the outer portions 62b, 63b are continuous over the whole circumference of the outer peripheral surface of the extensible portion 61.

The protrusion 64 projects from the perpendicular portion 62d in the outer portion 62b of the first contact surface 62 and is integrally molded with the extensible portion 61. The protrusions 64 are disposed similarly to the first protrusions 54 of the second embodiment illustrated in Fig. 6(a). The protrusions 64 are arc-shaped parts around the center axis C. The four protrusions 64 are disposed at regular intervals in the circumferential direction around the center axis C and disposed in rotational symmetry with respect to the center axis C. Respective radial distances from the center axis C to the plurality of protrusions 64 are same.

Since the protrusions 64 project from the first contact surfaces 62, similarly to the first and second embodiments, the extensible member 60 allows the first contact surfaces 62 and the second contact surfaces 63 to be less likely to be in close contact around the protrusions 64 during the extension and contraction of the extensible portion 61. When the first contact surface 62 and the second contact surface 63 are separated at once after being in close contact, air is likely to enter between the first contact surface 62 and the second contact surface 63 from around the protrusion 64. The extensible member 60 allows abnormal noise during the extension and contraction to be less likely to occur. Similarly to the first and second embodiments, the protrusion 64 projects from the outer portion 62b where the amount of deformation during the extension and contraction of the extensible portion 61 is small in the extensible member 60. The extensible member 60 allows suppressing the reduction in durability of the extensible portion 61 caused by disposing the protrusions 64.

The perpendicular portions 62d, 63d are straight lines perpendicular to the center axis C on the cross-sectional surface including the center axis C. When the perpendicular portions 62d, 63d are mutually in contact during the contraction of the extensible portion 61 and then separated, the insides in the radial direction of the mutual perpendicular portions 62d, 63d are likely to be separated first. Since the protrusions 64 are disposed on the perpendicular portions 62d, 63d, air is likely to enter the insides in the radial direction of the perpendicular portions 62d, 63d during the extension of the extensible portion 61. The extensible member 60 allows abnormal noise during the extension and contraction of the extensible portion 61 to be more less likely to occur.

The protrusion 64 has a radial dimension same as the radial dimension L2 of the first protrusion 54 of the second embodiment. As illustrated in Fig. 7(b), a circumferential dimension L4 of the protrusion 64 is formed larger than the radial dimension L2 of the protrusion 64. Similarly to the second embodiment, the extensible member 60 allows abnormal noise during the extension and contraction of the extensible portion 61 to be less likely to occur sufficiently with the reduced number of protrusions 64 and also allows suppressing the reduction in durability and deterioration of the buffering property of the extensible portion 61.

The circumferential dimension L4 of the protrusion 64 is formed larger than the circumferential dimension L3 of the first protrusion 54 and the second protrusion 55 of the second embodiment. The circumferential dimension L4 of the protrusion 64 is about twice the circumferential dimension L3 of the first protrusion 54 and the second protrusion 55. In contrast to the second embodiment in which the first protrusions 54 and the second protrusions 55 are disposed in the first contact surfaces 52 and the second contact surfaces 53, respectively, even when the protrusions 64 are disposed only in the first contact surfaces 62 in the example, the first contact surfaces 62 and the second contact surfaces 63 are less likely to be in close contact sufficiently during the contraction of the extensible portion 61 with the protrusions 64. The extensible member 60 allows abnormal noise during the extension and contraction of the extensible portion 61 to be less likely to occur sufficiently.

Fig. 7(b) illustrates a cross-sectional surface along the protrusion 64 and a cross-sectional surface perpendicular to the first contact surface 62 as the part where the protrusion 64 is disposed. On the cross-sectional surface of Fig. 7(b), in the protrusion 64, the distance from the first contact surface 62 to the distal end of the protrusion 64 (thickness of the protrusion 64) gradually shortens from the center in the circumferential direction to both ends in the circumferential direction.

When the first contact surface 62 and the second contact surface 63 are separated at once after being in close contact during the extension and contraction of the extensible portion 61, the protrusion 64 is gradually separated from the second contact surface 63 from both ends in the circumferential direction to the center in the circumferential direction of the protrusion 64. In the extensible member 60, air passes through a clearance where the protrusion 64 is separated from the second contact surface 63 and can quickly enter between the first contact surface 62 and the second contact surface 63 in the center axis C side of the protrusion 64. That is, the air quickly enters between the first contact surface 62 and the second contact surface 63 without the air coming around from both ends in the circumferential direction of the protrusion 64. The extensible member 60 allows abnormal noise during the extension and contraction of the extensible portion 61 to be more less likely to occur.

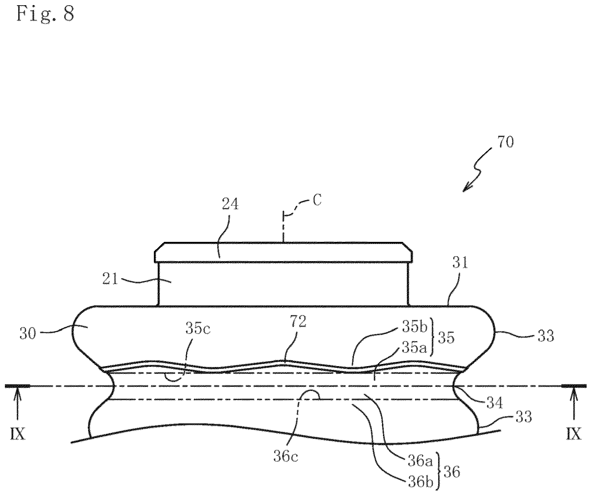

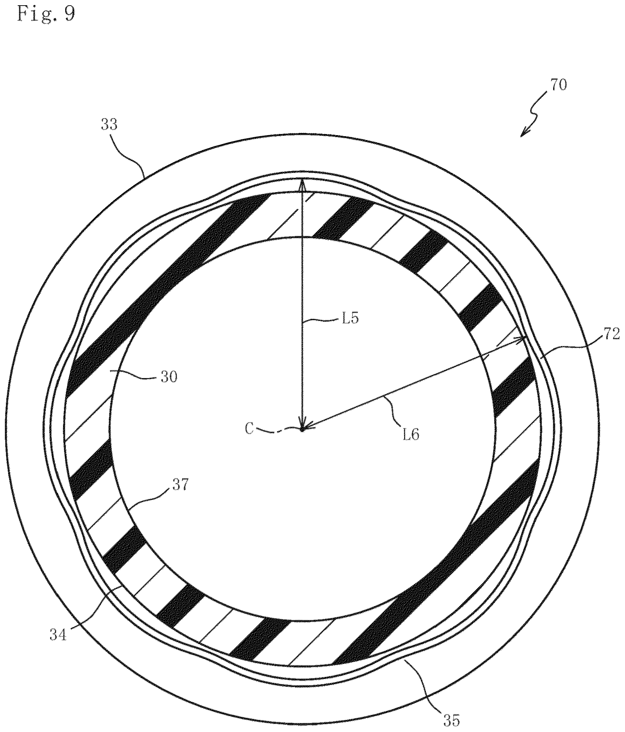

A further example will be described with reference to Fig. 8 and Fig. 9. In the first, and second embodiments and the example, the cases where the plurality of first protrusions 41, 54, second protrusions 42, 55, and protrusions 64 are disposed in the circumferential direction have been described. In the further example, a case where a protrusion 72 is formed continuously over the whole circumference in the circumferential direction will be described. Same reference numerals are given to parts same as those of the first embodiment and the description thereof will be omitted. Fig. 8 is a front view of an extensible member 70 of the further example. Fig. 9 is a cross-sectional view of the extensible member 70 along the line IX-IX of Fig. 8.

As illustrated in Fig. 8 and Fig. 9, the extensible member 70 includes the mounting portion 21, the extensible portion 30, and the protrusion 72 projecting from the outer portion 35b in the first contact surface 35 of the extensible portion 30. The extensible member 70 is a member made of a thermoplastic elastomer in which respective portions are integrally formed. The extensible member 70 is sandwiched between the axial end surface 3 of the cylinder 2 and the contact surface 17 of the bracket 11 and compressed in the axis direction to absorb an impact during compression by an elastic force from the extensible member 70.

The protrusion 72 projects from the outer portion 35b where the amount of deformation during the extension and contraction of the extensible portion 30 is small. Similarly to the first, and second embodiments and the example, the extensible member 70 allows abnormal noise during the extension and contraction of the extensible portion 30 to be less likely to occur with the protrusion 72 and also allows suppressing the reduction in durability of the extensible portion 30 caused by disposing the protrusion 72.

The protrusion 72 is a strip-shaped part formed continuously over the whole circumference around the center axis C. Since this allows the first contact surface 35 and the second contact surface 36 to be less likely to be in close contact at the further wide range during the contraction of the extensible portion 30, the extensible member 70 allows abnormal noise during the extension and contraction of the extensible portion 30 to be more less likely to occur.

The protrusion 72 smoothly changes its radial distance to the center axis C along the circumferential direction. Specifically, in the protrusion 72, a part where the radial distance from the center axis C becomes a maximum value L5 and a part where the radial distance from the center axis C becomes a minimum value L6 are provided in alternation at regular intervals in the circumferential direction. Viewing from the axis direction of the center axis C, the part with the maximum value L5 in the protrusion 72 is formed in a convex curved line shape to outside in the radial direction. Viewing from the axis direction of the center axis C, the part with the minimum value L6 in the protrusion 72 is formed in a convex curved line shape to inside in the radial direction. The respective convex curved lines are smoothly connected to one another.

During the extension and contraction of the extensible portion 30, after the first contact surfaces 35 are in close contact with the second contact surfaces 36, the first contact surfaces 35 and the second contact surfaces 36 are gradually separated mainly from radially outward. After the whole circumference of the protrusion 72 is in close contact with the second contact surfaces 36, the protrusion 72 is gradually separated from the second contact surfaces 36 from the part with the maximum value L5, which is positioned outermost in the circumferential direction in the protrusion 72, to the part with the minimum value L6. The extensible member 70 allows reducing the separation of the protrusion 72 from the second contact surfaces 36 at once. The extensible member 70 allows suppressing abnormal noise caused by the close contact of the protrusion 72 with the second contact surfaces 36.

The parts with the maximum value L5 and the parts with the minimum value L6 are disposed in alternation at regular intervals in the protrusion 72. When the protrusion 72 is gradually separated from the second contact surfaces 36, the extensible member 70 allows disposing the positions where the protrusion 72 has already been separated from the second contact surfaces 36 and the positions where the protrusion 72 is in still close contact with the second contact surfaces 36 to be approximately uniform over the circumferential direction. This allows suppressing the change in the way of deformation of the extensible portion 30 in the circumferential direction caused by, for example, a pressure of air passing through the part where the protrusion 72 has already been separated from the second contact surface 36. The extensible member 70 allows the way of deformation of the extensible portion 30 to be close to uniform over the circumferential direction. The extensible member 70 allows suppressing the reduction in durability of the extensible portion 30 caused by disposing the protrusion 72.

In the protrusion 72, the parts with the maximum value L5 and the parts with the minimum value L6 are formed in the curved line shape, and the radial distance from the center axis C to the protrusion 72 smoothly changes along the circumferential direction. This suppresses the concentration of stress on the parts with the maximum value L5 and the parts with the minimum value L6 during the extension and contraction of the extensible portion 30, compared with a case where the parts with the maximum value L5 and the parts with the minimum value L6 form squares in the protrusion 72. The extensible member 70 allows suppressing the reduction in durability of the protrusion 72 and the extensible portion 30.

As described above, while the present invention has been described based on the above-mentioned embodiments, the present invention is not limited to the embodiments by any means. It can be easily inferred that various improvements and modifications are possible within a scope as defined by the claims. For example, the shapes and the dimensions of the respective portions of the bracket 11 and the extensible members 20, 50, 60, 70 may be changed as necessary. The respective radial distances from the center axis C to the plurality of outer crests 33 may be set to be the same. Similarly to the plurality of outer roots 34, inner crests 37, and inner roots 38, the distances from the center axis C may be set to be the same. The convex surface portions 52e, 53e, 62e, 63e may be omitted, and outer portions may be formed by the planar portions 52d or the perpendicular portions 62d formed of straight lines on the cross-sectional surface including the center axis C. The outer crests 33 may be formed by straight lines approximately parallel to the center axis C on the cross-sectional surface including the center axis C.

The first protrusions 41, 54, the second protrusions 42, 55, and the protrusions 64, 72 may be disposed on the convex surface portions 52e, 53e, 62e, 63e in the outer portions 52b, 53b, 62b, 63b. During the extension and contraction of the extensible portions 51, 61, the first contact surfaces 52, 62 are separated from the second contact surfaces 53, 63 in the order from radially outward in many cases. By disposing the first protrusions 41, 54, the second protrusions 42, 55, and the protrusions 64, 72 on the convex surface portions 52e, 53e, 62e, 63e, air is likely to enter quickly between the first contact surfaces 52, 62 and the second contact surfaces 53, 63. Abnormal noise during the extension and contraction of the extensible portions 51, 61 is less likely to occur.

In the embodiments, while the extensible members 20, 50, 60, 70 as the stoppers sandwiched between the axial end surface 3 of the cylinder 2 and the contact surface 17 of the bracket 11 have been described, the present invention is not necessarily limited to the embodiments. The extensible member only needs to be a member that includes the extensible portion 30, 51, 61 having the outer peripheral surface and the inner peripheral surface in the bellows shape in which the mountains and the troughs are continuous in the axis direction and extends and contracts in the axis direction. For example, the extensible member may be, for example, a dust cover that covers the outer periphery of the shock absorber 1. However, the present invention is preferably applied to the extensible member as the stopper. Since the first contact surfaces 35, 52, 62 and the second contact surfaces 36, 53, 63 are in instantaneously close contact and then separated in the stopper that absorbs an impact by extension and contraction of the extensible member in the axis direction, abnormal noise during the extension and contraction of the extensible member tends to be a problem. By disposing the first protrusions 41, 54, the second protrusions 42, 55, and the protrusions 64, 72 in the extensible member that absorbs an impact, abnormal noise during the extension and contraction of the extensible member, which tends to be problem, is suppressed.

While the cases where the first protrusions 41, 54 and the second protrusions 42, 55 are disposed separately in alternation in the circumferential direction have been described in the first and second embodiments, the present invention is not necessarily limited to the embodiments. The first protrusions 41, 54, the second protrusions 42, 55, and the protrusions 64, 72 may be randomly disposed. The fine first protrusions 41, 54, second protrusions 42, 55, and protrusions 64, 72 may be formed with unevennesses formed on a mold for forming the first contact surfaces 35, 52, 62 and the second contact surfaces 36, 53, 63 by, for example, etching, sand-blasting, and shot-blasting.

During the extension and contraction of the extensible portions 30, 51, 61, stress is less likely to concentrate on the extensible portions 30, 51, 61 around the fine first protrusions 41, 54, second protrusions 42, 55, and protrusions 64, 72. Even when the fine first protrusions 41, 54, second protrusions 42, 55, and protrusions 64, 72 are disposed on the inner portions 35a, 36a, the durability of the extensible portions 30, 51, 61 is ensured. In other words, by disposing the first protrusions 41, 54, the second protrusions 42, 55, and the protrusions 64, 72 only in the outer portions 35b, 36b, 52b, 53b, 62b, 63b, even when the first protrusions 41, 54, the second protrusions 42, 55, and the protrusions 64, 72 are increased in size, the durability of the extensible portions 30, 51, 61 is ensured.

Instead of the first contact surfaces 35, 52, 62, the protrusions 64, 72 of the examples may project only from the second contact surfaces 36, 53, 63. As in the first and second embodiments, while the protrusions (first protrusions) 64 project from the first contact surfaces 35, 52, 62, the protrusions (second protrusions) 64 may project from the second contact surfaces 36, 53, 63.

As in the first and second embodiments, while the protrusion (first protrusion) 72 projects from the first contact surfaces 35, 52, 62, the protrusion (second protrusion) 72 may project from the second contact surfaces 36, 53, 63. The part with the maximum value L5 in the first protrusion 72 and the part with the maximum value L5 in the second protrusion 72 are preferably disposed separately in the circumferential direction. During the extension and contraction of the extensible portions 30, 51, 61, the way of deformation of the first contact surfaces 35, 52, 62 and the way of deformation of the second contact surfaces 36, 53, 63 are close to be uniform.

Note that a part of the first protrusion 72 and the second protrusion 72 intersect, and a load applied from the intersecting part to the first contact surfaces 35, 52, 62 and the second contact surfaces 36, 53, 63 locally increases. The protrusion 72, which is continuous over the whole circumference, is preferably disposed on only any one of the first contact surfaces 35, 52, 62 or the second contact surfaces 36, 53, 63. Since the load applied from the protrusion 72 to the first contact surfaces 35, 52, 62 and the second contact surfaces 36, 53, 63 can be close to be uniform over the circumferential direction, the deterioration of durability of the extensible portions 30, 51, 61 caused by the protrusion 72 is suppressed.

### [Reference Signs List]

20, 50, 60, 70: extensible member
30, 51, 61: extensible portion
33: outer crest
34: outer root
35, 52, 62: first contact surface
35a, 36a: inner portion
35b, 36b, 52b, 53b, 62b, 63b: outer portion
36, 53, 63: second contact surface
37: inner crest
38: inner root
41, 54: first protrusion (protrusion)
42, 55: second protrusion (protrusion)
62d, 63d: perpendicular portion
64, 72: protrusion
C: center axis

## Claims

1. An extensible member (20, 50, 60) comprising:
a tubular extensible portion (30, 51, 61) made of a thermoplastic elastomer that has an inner peripheral surface and an outer peripheral surface in a bellows shape in which mountains and troughs are continuous in an axis direction; and
at least one protrusion (41, 42, 54, 55, 64) that projects from the outer peripheral surface,
wherein the outer peripheral surface includes:
outer crests (33) as crests of mountains;
outer roots (34) as bottoms of troughs; and
first contact surfaces (35, 52, 62) and second contact surfaces (36, 53, 63) between the outer crests (33) and the outer roots (34) that are positioned to be contactable with one another when the extensible portion (30, 51, 61) axially contracts,
the inner peripheral surface includes:
inner crests (37) as crests of mountains; and
inner roots (38) as bottoms of troughs,
the inner crests (37) are positioned radially inward of all of the outer roots (34), and the inner roots (38) are positioned radially inward of all of the outer crests (33),
the protrusion (41, 42, 54, 55, 64) is positioned on at least one of the first contact surfaces (35, 52, 62) and the second contact surfaces (36, 53, 63), and
the protrusion includes a plurality of first protrusions (41, 54) that project from the first contact surfaces (35, 52), **characterized in that**
the protrusion further includes a plurality of second protrusions (42, 55) that project from the second contact surfaces (36, 53), and
the plurality of first protrusions (41, 54) and the second protrusions (42, 55) are disposed separately in alternation in a circumferential direction on the first contact surfaces (35, 52) and the second contact surfaces (36, 53) contactable with one another.

2. The extensible member (20, 50, 60) according to claim 1,
wherein on a cross-sectional surface including a center axis (C) of the extensible portion (30, 51, 61), the first contact surface (35, 52, 62) and the second contact surface (36, 53, 63) include:
an inner portion (35a, 36a) formed of a concave curved line continuous with the outer root (34); and
an outer portion (35b, 36b, 52b, 53b, 62b, 63b) formed of at least one of a straight line or a convex curved line connecting the inner portion (35a, 36a) and the outer crest (33), and
the protrusion (41, 42, 54, 55, 64) is positioned on the outer portion (35b, 36b, 52b, 53b, 62b, 63b).

3. The extensible member (60) according to claim 2,
wherein the outer portion (62b, 63b) includes a perpendicular portion (62d, 63d) on the cross-sectional surface including the center axis (C) of the extensible portion (61), the perpendicular portion (62d, 63d) being continuous with the inner portion (35a, 36a) and formed of a straight line perpendicular to the center axis (C) of the extensible portion (61), and
the protrusion (64) is positioned on the perpendicular portion (62d).

4. The extensible member (20, 50, 60) according to any one of claims 1 to 3,
wherein the protrusions (41, 42, 54, 55, 64) are disposed in rotational symmetry with respect to the center axis (C) of the extensible portion (30, 51, 61).

5. The extensible member (50, 60) according to any one of claims 1 to 4,
wherein the protrusion (54, 55, 64) has a circumferential dimension larger than a radial dimension.

6. The extensible member (20, 50) according to any one of claims 1 to 5,
wherein the plurality of respective first protrusions (41, 54) and second protrusions (42, 55) are disposed at regular intervals around the center axis of the extensible portion,
when viewed in the axial direction of the center axis of the extensible portion, all of the first protrusions (41, 54) and the second protrusions (42, 55) are disposed on an imaginary circle at a predetermined radius around the center axis,
the second protrusion (42, 55) are positioned at a center in a circumferential direction of the first protrusions (41, 54) adjacent in the circumferential direction, and
the first protrusion (41, 54) are positioned at a center in the circumferential direction of the second protrusions (42, 55) adjacent in the circumferential direction.

## Patentansprüche

1. Dehnbares Element (20, 50, 60), umfassend:
einen röhrenförmigen dehnbaren Abschnitt (30, 51, 61), der aus einem thermoplastischen Elastomer hergestellt ist, der eine innere periphere Oberfläche und eine äußere periphere Oberfläche in einer Balgform aufweist, in der Berge und Täler in einer Achsenrichtung kontinuierlich sind; und
mindestens einen Vorsprung (41, 42, 54, 55, 64), der von der äußeren peripheren Oberfläche vorsteht,
wobei die äußere periphere Oberfläche umfasst:
äußere Kämme (33) als Kämme von Bergen;
äußere Wurzeln (34) als Böden von Tälern; und
erste Kontaktflächen (35, 52, 62) und zweite Kontaktflächen (36, 53, 63) zwischen den äußeren Kämmen (33) und den äußeren Wurzeln (34), die so angeordnet sind, dass sie miteinander in Kontakt kommen können, wenn sich der dehnbare Abschnitt (30, 51, 61) axial zusammenzieht,
wobei die innere periphere Oberfläche umfasst:
innere Kämme (37) als Kämme von Bergen; und
innere Wurzeln (38) als Böden von Tälern,
wobei die inneren Kämme (37) radial einwärts von allen äußeren Wurzeln (34) angeordnet sind und die inneren Wurzeln (38) radial einwärts von allen äußeren Kämmen (33) angeordnet sind,
wobei der Vorsprung (41, 42, 54, 55, 64) auf mindestens einer der ersten Kontaktflächen (35, 52, 62) und der zweiten Kontaktflächen (36, 53, 63) angeordnet ist, und
wobei der Vorsprung eine Mehrzahl von ersten Vorsprüngen (41, 54) umfasst, die von den ersten Kontaktflächen (35, 52) vorstehen, **dadurch gekennzeichnet, dass**
der Vorsprung weiterhin eine Mehrzahl von zweiten Vorsprüngen (42, 55) umfasst, die von den zweiten Kontaktflächen (36, 53) vorstehen, und
die Mehrzahl von ersten Vorsprüngen (41, 54) und die zweiten Vorsprünge (42, 55) separat abwechselnd in einer Umfangsrichtung auf den ersten Kontaktflächen (35, 52) und den zweiten Kontaktflächen (36, 53) vorgesehen sind, die miteinander in Kontakt gebracht werden können.

2. Dehnbares Element (20, 50, 60) gemäß Anspruch 1,
wobei auf einer Querschnittsoberfläche, die eine Mittelachse (C) des dehnbaren Abschnitts (30, 51, 61) umfasst, die erste Kontaktfläche (35, 52, 62) und die zweite Kontaktfläche (36, 53, 63) umfassen:
einen inneren Abschnitt (35a, 36a), der aus einer konkaven gekrümmten Linie gebildet ist, die mit der äußeren Wurzel (34) kontinuierlich ist; und
einen äußeren Abschnitt (35b, 36b, 52b, 53b, 62b, 63b), der aus mindestens einer von einer geraden Linie oder einer konvexen gekrümmten Linie gebildet ist, die den inneren Abschnitt (35a, 36a) und den äußeren Kamm (33) verbindet, und
wobei der Vorsprung (41, 42, 54, 55, 64) auf dem äußeren Abschnitt (35b, 36b, 52b, 53b, 62b, 63b) angeordnet ist.

3. Dehnbares Element (60) gemäß Anspruch 2,
wobei der äußere Abschnitt (62b, 63b) einen senkrechten Abschnitt (62d, 63d) auf der Querschnittsoberfläche umfasst, die die Mittelachse (C) des dehnbaren Abschnitts (61) umfasst, wobei der senkrechte Abschnitt (62d, 63d) mit dem inneren Abschnitt (35a, 36a) kontinuierlich ist und aus einer geraden Linie senkrecht zu der Mittelachse (C) des dehnbaren Abschnitts (61) gebildet ist, und
wobei der Vorsprung (64) auf dem senkrechten Abschnitt (62d) angeordnet ist.

4. Dehnbares Element (20, 50, 60) gemäß einem der Ansprüche 1 bis 3,
wobei die Vorsprünge (41, 42, 54, 55, 64) in Rotationssymmetrie in Bezug auf die Mittelachse (C) des dehnbaren Abschnitts (30, 51, 61) vorgesehen sind.

5. Dehnbares Element (50, 60) gemäß einem der Ansprüche 1 bis 4,
wobei der Vorsprung (54, 55, 64) eine Umfangsabmessung aufweist, die größer als eine radiale Abmessung ist.

6. Dehnbares Element (20, 50) gemäß einem der Ansprüche 1 bis 5,
wobei die Mehrzahl von jeweiligen ersten Vorsprüngen (41, 54) und zweiten Vorsprüngen (42, 55) in regelmäßigen Intervallen um die Mittelachse des dehnbaren Abschnitts vorgesehen sind,
wenn in der axialen Richtung der Mittelachse des dehnbaren Abschnitts betrachtet, alle der ersten Vorsprünge (41, 54) und der zweiten Vorsprünge (42, 55) auf einem imaginären Kreis bei einem vorbestimmten Radius um die Mittelachse vorgesehen sind,
wobei der zweite Vorsprung (42, 55) in einer Mitte in einer Umfangsrichtung der ersten Vorsprünge (41, 54) benachbart in der Umfangsrichtung angeordnet ist, und
wobei der erste Vorsprung (41, 54) in einer Mitte in der Umfangsrichtung der zweiten Vorsprünge (42, 55) benachbart in der Umfangsrichtung angeordnet ist.

## Revendications

1. Un élément extensible (20, 50, 60) comprenant :
une portion tubulaire extensible (30, 51, 61) faite d'un élastomère thermoplastique qui a une surface périphérique intérieure et une surface périphérique extérieure en forme de soufflet dans lesquelles des crêtes et des creux sont continus dans une direction axiale ; et
au moins une saillie (41, 42, 54, 55, 64) qui fait saillie depuis la surface périphérique extérieure,
dans lequel la surface périphérique extérieure inclut :
des crêtes extérieures (33) en tant que sommets de crêtes ;
des racines extérieures (34) en tant que fonds de creux ; et
des premières surfaces de contact (35, 52, 62) et des secondes surfaces de contact (36, 53, 63) entre les crêtes extérieures (33) et les racines extérieures (34) qui sont positionnées pour pouvoir être en contact les unes avec les autres lorsque la portion extensible (30, 51, 61) se contracte axialement,
la surface périphérique intérieure inclut :
des crêtes intérieures (37) en tant que sommets de crêtes ; et
des racines intérieures (38) en tant que fonds de creux,
les crêtes intérieures (37) sont positionnées radialement vers l'intérieur de toutes les racines extérieures (34), et les racines intérieures (38) sont positionnées radialement vers l'intérieur de toutes les crêtes extérieures (33),
la saillie (41, 42, 54, 55, 64) est positionnée sur au moins une des premières surfaces de contact (35, 52, 62) et des secondes surfaces de contact (36, 53, 63), et
la saillie inclut une pluralité de premières saillies (41, 54) qui font saillie depuis les premières surfaces de contact (35, 52),
**caractérisé en ce que**
la saillie inclut en outre une pluralité de secondes saillies (42, 55) qui font saillie depuis les secondes surfaces de contact (36, 53), et
la pluralité de premières saillies (41, 54) et les secondes saillies (42, 55) sont disposées séparément en alternance dans une direction circonférentielle sur les premières surfaces de contact (35, 52) et les secondes surfaces de contact (36, 53) qui peuvent être mises en contact les unes avec les autres.

2. L'élément extensible (20, 50, 60) selon la revendication 1,
dans lequel sur une surface de section transversale incluant un axe central (C) de la portion extensible (30, 51, 61), la première surface de contact (35, 52, 62) et la seconde surface de contact (36, 53, 63) incluent :
une portion intérieure (35a, 36a) formée d'une ligne incurvée concave continue avec la racine extérieure (34) ; et
une portion extérieure (35b, 36b, 52b, 53b, 62b, 63b) formée d'au moins une d'une ligne droite ou d'une ligne incurvée convexe connectant la portion intérieure (35a, 36a) et la crête extérieure (33), et
la saillie (41, 42, 54, 55, 64) est positionnée sur la portion extérieure (35b, 36b, 52b, 53b, 62b, 63b).

3. L'élément extensible (60) selon la revendication 2,
dans lequel la portion extérieure (62b, 63b) inclut une portion perpendiculaire (62d, 63d) sur la surface de section transversale incluant l'axe central (C) de la portion extensible (61), la portion perpendiculaire (62d, 63d) étant continue avec la portion intérieure (35a, 36a) et formée d'une ligne droite perpendiculaire à l'axe central (C) de la portion extensible (61), et
la saillie (64) est positionnée sur la portion perpendiculaire (62d).

4. L'élément extensible (20, 50, 60) selon l'une quelconque des revendications 1 à 3,
dans lequel les saillies (41, 42, 54, 55, 64) sont disposées selon une symétrie de rotation par rapport à l'axe central (C) de la portion extensible (30, 51, 61).

5. L'élément extensible (50, 60) selon l'une quelconque des revendications 1 à 4,
dans lequel la saillie (54, 55, 64) a une dimension circonférentielle plus grande qu'une dimension radiale.

6. L'élément extensible (20, 50) selon l'une quelconque des revendications 1 à 5,
dans lequel la pluralité de premières saillies (41, 54) et de secondes saillies (42, 55) respectives sont disposées à des intervalles réguliers autour de l'axe central de la portion extensible,
lorsqu'elles sont vues dans la direction axiale de l'axe central de la portion extensible, toutes les premières saillies (41, 54) et les secondes saillies (42, 55) sont disposées sur un cercle imaginaire à un rayon prédéterminé autour de l'axe central,
les secondes saillies (42, 55) sont positionnées à un centre dans une direction circonférentielle des premières saillies (41, 54) adjacentes dans la direction circonférentielle, et
les premières saillies (41, 54) sont positionnées à un centre dans la direction circonférentielle des secondes saillies (42, 55) adjacentes dans la direction circonférentielle.
